# FASCICULE DE BREVET EUROPEEN

(11) **EP 2 210 079 B1**
(45) Date de publication et mention de la délivrance du brevet: **19.10.2016**
(21) Numéro de dépôt: 08871610.5
(22) Date de dépôt: 29.10.2008
(51) Int. Cl.: G01L 23/10, H01T 13/40

(54) **DISPOSITIF D'ALLUMAGE PAR ÉTINCELLE À CAPTEUR DE COMBUSTION INTÉGRÉ**
VERGASERVORRICHTUNG MIT EINGEBAUTEM VERBRENNUNGSSENSOR
SPARK IGNITION DEVICE WITH IN-BUILT COMBUSTION SENSOR

(30) Priorité: 29.10.2007 US 983334 P; 28.10.2008 FR 0805991
(43) Date de publication de la demande: 28.07.2010
(73) Titulaire: Continental Automotive France, 31100 Toulouse (FR); Federal-Mogul Italy Srl, 41012 Carpi (IT)
(72) Inventeur: L'HENORET, Benjamin, F-75116 Paris (FR); HAAG, Jan, 93149 Nittenau (DE); BURROWS, Johan, A., Cheshire CW8 4NR (GB); CLARKE, Robin, Cheshire CW8 4RU (GB); TINWELL, Paul, F-83440 Feyence (FR)
(74) Mandataire: Santarelli
(86) Numéro de dépôt international: PCT/FR2008/001520
(87) Numéro de publication internationale: WO 2009/092888

(56) Documents cités:
- EP-A- 0 581 067
- FR-A- 2 903 531
- US-A- 4 169 388
- US-A1- 2002 195 917

## Description

La présente invention concerne de façon générale des dispositifs d'allumage par étincelle, tels des bougies d'allumage, et plus particulièrement des bougies d'allumage ayant un capteur de combustion intégré.

Des bougies d'allumage ont été utilisées pendant de nombreuses années pour procurer un moyen pour allumer un mélange de carburant et d'air dans des chambres de combustion de moteurs à combustion interne à allumage commandé. Les bougies d'allumage ont pris de nombreuses formes pour s'adapter à la conception particulière et à l'environnement particulier des moteurs. En général, les bougies d'allumage comportent une électrode centrale entourée d'un isolateur, l'isolateur étant disposé dans, et emprisonné par, un corps ou enveloppe métallique. L'enveloppe comporte habituellement plusieurs filets qui sont adaptés à des filets se trouvant dans une culasse au niveau d'un alésage appelé puits de bougie. Les filets permettent à la bougie d'allumage d'être vissée dans la culasse en utilisant un outil classique. En outre, l'enveloppe comporte au moins une électrode de masse qui est située sur, ou s'étend depuis, une extrémité de l'enveloppe à proximité de l'électrode centrale. L'électrode de masse définit avec l'électrode centrale un écartement d'électrodes au niveau duquel peut se produire une étincelle. L'enveloppe agit aussi à la manière d'un blindage de masse pour établir un trajet de mise à la terre menant de l'écartement d'électrodes au bloc moteur. La bougie est en appui ou porte de façon étanche contre la culasse du moteur pour fermer de façon étanche la chambre de combustion et empêcher des gaz de combustion de s'échapper à travers le puits de bougie correspondant.

Les moteurs à allumage commandé tendent à délivrer une puissance toujours plus grande et à avoir un rendement toujours plus élevé, ainsi qu'à utiliser divers types de carburants, ce qui, dans l'ensemble, a augmenté le besoin portant sur divers types de capteurs de combustion, et leur utilisation, nécessaires pour atteindre ces objectifs en permettant une meilleure maîtrise du moteur et des processus de combustion.

Des capteurs de combustion, en particulier des capteurs de pression de combustion, étaient généralement des capteurs distincts introduits dans la chambre de combustion à travers des trous taraudés spéciaux réalisés uniquement pour loger ces capteurs, et les capteurs eux-mêmes étaient généralement utilisés uniquement au niveau de la phase de développement des moteurs et de la commande des moteurs et non dans la production en grande série du fait de leur coût élevé et des demandes supplémentaires d'espace dans la culasse et au voisinage de celle-ci pour leur utilisation. Les conceptions des moteurs qui font appel de plus en plus à des soupapes multiples, à des points d'injection de carburant multiples, à des systèmes d'allumage commandé à bobine, à d'autres capteurs associés à la combustion et d'autres particularités ont imposé des demandes croissantes sur l'enveloppe d'espace dans et au voisinage de la culasse à proximité immédiate de la chambre de combustion, en particulier l'espace se trouvant au-dessus de la chambre de combustion, lesquelles ont, à leur tour, rendu souhaitable de réduire l'enveloppe d'espace totale nécessaire aux bougies d'allumage et aux capteurs de pression de combustion. En outre, l'utilisation de capteurs de pression de combustion conjointement avec des moteurs et des unités de commande de moteurs produits en grande série nécessite la conception de capteurs ayant un coût substantiellement réduit en comparaison avec celui des capteurs de pression à l'unité.

A cet égard, une combinaison d'une bougie d'allumage et d'un capteur de combustion piézoélectrique a été proposée dans le brevet n° US-6 756 722. Dans ce brevet, une bougie d'allumage ayant une enveloppe métallique présentant un alésage central annulaire, un isolateur céramique ayant aussi un alésage central qui est fixé à l'enveloppe en déformant une partie de celle-ci et est également retenu par un rebord formé dans l'alésage annulaire de l'enveloppe, une électrode centrale placée dans l'alésage central de l'isolateur et une électrode de masse fixée à l'enveloppe et espacée de l'électrode centrale pour réaliser un écartement d'électrodes. La bougie d'allumage du brevet précité est équipée d'un capteur piézoélectrique cylindrique formé d'un certain nombre de composants cylindriques qui sont placées sur la surface extérieure de la bougie d'allumage. Les composants du capteur piézoélectrique sont emprisonnés entre un élément métallique de maintien qui comporte aussi, à une extrémité, une tête hexagonale pour la fixation de la bougie d'allumage et un siège cylindrique à rebord qui est conçu pour s'appliquer contre l'isolateur ou un retour de l'enveloppe. Deux rondelles cylindriques sont placées à proximité de l'élément de maintien et du siège et entre ceux-ci pour présenter des surfaces respectives d'appui et protéger une paire respective d'éléments céramiques piézoélectriques qui sont séparés l'un de l'autre par une électrode cylindrique unique. Un isolateur est placé sur le siège à proximité des céramiques piézoélectriques et de l'électrode pour les isoler électriquement du siège. Un joint torique est placé dans une gorge située dans l'alésage intérieur du siège pour assurer l'étanchéité à l'eau entre le siège et l'isolateur de la bougie d'allumage. Pendant la fabrication et l'assemblage du dispositif, les composants du capteur sont placées au-dessus de l'isolateur et de l'enveloppe de la bougie d'allumage assemblée et sont précontraints en compression entre l'élément de maintien et le siège. Une fois que la précontrainte prédéterminée est atteinte, l'élément de maintien est fixé à l'enveloppe par soudage au laser afin d'achever l'assemblage de la bougie d'allumage et du capteur. Pendant le fonctionnement de la bougie d'allumage comportant le capteur de pression intégré, montrée dans le brevet n° US-'722 précité, dans un moteur à combustion interne, à chaque combustion d'un mélange de carburant et d'air, la pression des gaz de combustion agit sur l'isolateur et/ou l'enveloppe, suivant la configuration particulière du capteur et de la bougie d'allumage, contre le siège, comprimant et sollicitant ainsi davantage les éléments piézoélectriques et produisant un signal électrique de sortie en lien avec la pression exercée par les gaz de combustion. En conséquence, le dispositif du brevet n° US-'722 précité est conçu à la fois pour produire l'étincelle pour l'allumage commandé et un signal de sortie représentatif de la pression de combustion résultante.

Une autre bougie d'allumage à capteur de pression intégré a été décrite dans la demande de brevet DE102005062881. Cette demande décrit une bougie d'allumage ayant des éléments similaires à ceux de la bougie du brevet n° US-'722 précité, lesquels n'ont donc pas à être de nouveau décrits ici. Cependant, la construction du capteur de pression est quelque peu différente de celle décrite dans le brevet n° US-'722. Alors que ce dernier décrit un ensemble capteur situé sur l'extérieur de la bougie d'allumage, en particulier sur l'extérieur de l'enveloppe et de l'isolateur, la demande DE-'881 décrit un capteur de pression piézoélectrique qui est situé à l'intérieur de la bougie d'allumage, en particulier entre une partie de l'isolateur et l'enveloppe. Dans la publication DE102005062881 précitée, l'isolateur est supporté à l'intérieur de l'enveloppe sur un épaulement qui correspond à la région de nez central de l'isolateur. L'isolateur et l'enveloppe comportent aussi chacun des épaulements inférieurs supplémentaires qui forment ensemble une cavité en forme de parallélogramme qui est utilisée pour emprisonner les éléments du capteur piézoélectrique, qui comprennent un cylindre piézoélectrique chanfreiné, qui est chanfreiné de façon à s'adapter à l'épaulement de l'isolateur et une rondelle élastique de forme adaptée de façon à s'adapter à l'épaulement de l'enveloppe. Une électrode circulaire est formée à la surface de l'épaulement inférieur de l'isolateur et établit un contact électrique pour la surface chanfreinée de l'élément piézoélectrique. L'électrode circulaire est connectée électriquement à une section d'électrode verticale qui, elle-même, est connectée électriquement à une autre électrode circulaire formée sur la surface libre de l'isolateur qui est adaptée pour permettre une connexion électrique extérieure sur le capteur et une sortie depuis le capteur pendant le fonctionnement du capteur de pression. Pendant l'assemblage de la bougie d'allumage, une précontrainte de compression est appliquée à l'isolateur, à l'enveloppe et au capteur piézoélectrique conjointement avec la formation d'un épaulement supérieur de l'enveloppe. Pendant le fonctionnement de la bougie d'allumage de la demande DE102005062881 précitée ayant le capteur de pression intégré, dans un moteur à combustion interne, à chaque combustion du mélange de carburant et d'air, la pression des gaz de combustion tend à éloigner élastiquement par pression l'isolateur de l'enveloppe dans l'espace qui loge le capteur, réduisant ainsi périodiquement la précontrainte de l'ensemble et produisant un signal électrique qui est lié à la pression exercée par les gaz de combustion.

La demande internationale WO-2008/003846 illustrée sur la figure 9, décrit une autre configuration encore d'une bougie d'allumage ayant un capteur de pression intégré. Dans cette demande, la surface extérieure de l'enveloppe extérieure 208 comporte un filetage 220 qui est utilisé pour le vissage de la bougie dans un puits de bougie. Une contre-dépouille de filetage 222 est située au-dessus du filetage 220 et réalise une transition entre la zone filetée 220 et un corps. La contre-dépouille de filetage 222 réalise une transition vers un rebord 224 de garniture du corps qui est plus large que la partie restante du corps et se rétrécit par l'intermédiaire d'un épaulement jusqu'à la partie supérieure du corps. La partie supérieure du corps de l'enveloppe extérieure a une épaisseur de paroi globalement uniforme avec une petite zone déformable d'épaisseur de paroi réduite (avant l'assemblage) qui est écrasée radialement vers l'intérieur et axialement en même temps qu'un chauffage de cette partie pendant l'assemblage de la bougie d'allumage pour former un joint étanche au gaz et pour fixer mécaniquement (c'est-à-dire "bloquer à chaud") l'enveloppe extérieure à l'isolateur. Après l'assemblage, la partie supérieure du corps a une épaisseur de paroi sensiblement uniforme. A l'extrémité libre de la partie supérieure du corps opposée au rebord de garniture, il existe un retour ou rebord 218 qui comporte un épaulement 216 qui est également formé conjointement avec la bougie d'allumage et emprisonne l'isolateur 206 à l'intérieur de l'enveloppe extérieure 208. Le capteur piézoélectrique 230 est en appui sur l'épaulement inférieur et s'étend le long de la partie supérieure du corps. Le capteur piézoélectrique 230 peut comprendre soit un élément piézoélectrique, soit un élément piézorésistif, et comporte une bague intermédiaire ou inférieure 226 qui est formée d'un métal, tel que de l'acier, qui s'étend globalement en forme de L en section transversale depuis une section plus étroite qui est en appui sur l'épaulement du corps et sur la zone déformable jusqu'à une section plus large qui constitue un siège pour l'électrode annulaire inférieure 234, sur sa surface inférieure. La surface supérieure de l'électrode annulaire inférieure 234 procure un siège mécanique et un contact électrique pour l'élément piézoélectrique 232. Cet élément piézoélectrique 232 se présente sous la forme d'une bague cylindrique ou d'un disque ayant une section transversale rectangulaire. Cet élément 232 peut être soit un élément piézoélectrique, soit un élément piézorésistif. La surface inférieure de l'électrode annulaire supérieure 234 procure aussi un siège mécanique opposé et un contact électrique pour l'élément piézoélectrique 232. La surface supérieure de l'électrode annulaire supérieure 234 est en appui contre la surface inférieure d'une rondelle isolante 236. La rondelle isolante 236 est en appui sur l'électrode annulaire supérieure 234 qu'il isole électriquement de l'extrémité d'une douille supérieure 238. Le diamètre intérieur de l'électrode annulaire supérieure 234 et la partie du diamètre extérieur du corps à laquelle elle est adjacente sont choisis de façon à établir un espace suffisant pour assurer l'isolement électrique entre l'électrode annulaire supérieure 234 et le corps. La douille supérieure 238 est en contact avec, et est soudée à, la surface extérieure du corps. Les éléments du capteur piézoélectrique 230 sont en contact physique sous une précontrainte de compression provenant d'une pression appliquée depuis la douille supérieure 238 à la surface supérieure de la rondelle isolante 236. Le soudage de la douille supérieure 238 au corps fixe la précontrainte. L'électrode annulaire supérieure 234 comporte aussi une patte de connexion 240 s'étendant axialement pour une connexion électrique à une ligne de signal pour la transmission du signal délivré en sortie par le capteur piézoélectrique 230. Pendant le fonctionnement de la bougie d'allumage de la demande WO-'846 comportant le capteur de pression intégré, dans un moteur à combustion interne, à chaque combustion d'un mélange de carburant et d'air, la pression des gaz de combustion tend à exercer une pression axiale vers l'extérieur contre l'isolateur 206 depuis l'extrémité d'allumage associée à l'électrode centrale 202, l'électrode de masse 204 et l'écartement entre celles-ci. De ce fait, l'isolateur 206 vient en appui contre le retour 218 de l'enveloppe extérieure et provoque une déformation périodique élastique dé traction de l'enveloppe extérieure 208 dans la région située entre le retour 218 et le rebord de garniture du corps 224, qui est également la région de l'enveloppe extérieure 208 qui est proche du capteur piézoélectrique 230. Cet étirement en traction de l'enveloppe extérieure 208 réduit aussi périodiquement la précontrainte d'assemblage du capteur 230 et produit un signal électrique en lien avec la pression exercée par les gaz de combustion et qui peut être émis en sortie par l'intermédiaire de la patte de connexion 240. Le capteur comprend aussi un capot de recouvrement 242 qui protège les autres éléments du capteur contre une détérioration mécanique, l'entrée de saletés, d'eau ou d'autres contaminants, et qui supprime les effets de parasites radiofréquences.

Bien que le dispositif de la demande WO-'846 précitée présente une certaine similarité avec celui du brevet US-'722 précité par le fait que les éléments du capteur sont placés à l'extérieur de l'isolateur et de l'enveloppe de la bougie d'allumage, il se distingue du brevet US-'722 par la nature et l'agencement des éléments du capteur, ainsi que par les moyens par lesquels il interagit avec l'isolateur et l'enveloppe extérieure pendant le fonctionnement du dispositif. Par exemple, la demande WO-'846 décrit un élément piézoélectrique unique, au lieu de deux dans le brevet US-'722, et elle ne comprend pas d'électrodes comme c'est le cas du capteur décrit dans le brevet US-'722. En outre, le capteur piézoélectrique de la demande WO-'846 est fixé uniquement à l'enveloppe extérieure et est porté par l'enveloppe extérieure, à la différence des diverses formes de réalisation du brevet US-'722 dans lesquelles le capteur est fixé à l'enveloppe extérieure et est porté par une combinaison de l'isolateur et d'un capot, ou de l'isolateur et de l'enveloppe extérieure et du capot. La demande WO-'846 est similaire à la demande DE-'881 par le fait que le capteur est précontraint en compression et que, pendant que le fonctionnement de la bougie d'allumage, la contrainte diminue périodiquement au moment où l'isolateur est poussé axialement vers l'extérieur contre l'enveloppe, ce qui a pour résultat de décharger périodiquement une partie de la pression de précontrainte. Cependant, la construction interne du capteur de pression et l'utilisation d'éléments différents et leurs agencements distinguent la bougie d'allumage de la demande WO-'846 de celle de la demande DE-'881.

Bien que ces conceptions de bougies d'allumage de l'art antérieur comportant des capteurs de pression intégrés diffèrent chacune les unes des autres, elles représentent des exemples des progrès de la technique. Cependant, il subsiste un besoin portant sur des bougies d'allumage intégrées ayant des capteurs de gaz de combustion intégrés qui améliorent encore les progrès de la technique.

Il est proposé une bougie d'allumage destinée à enflammer un mélange carburant/air dans un moteur à combustion interne ayant un capteur intégré de combustion d'essence (ou d'un autre carburant). La bougie d'allumage comprend un ensemble à électrode centrale ayant une tige de branchement à une extrémité et une électrode centrale présentant une surface d'éclatement à une extrémité opposée ; un isolateur globalement tubulaire entourant l'ensemble à électrode centrale ; une enveloppe entourant l'isolateur et ayant un retour sur une première extrémité, un corps ayant une surface extérieure et un épaulement de corps sur un rebord de garniture de celui-ci, une partie filetée et une électrode de masse ; et un ensemble piézocapteur situé sur l'épaulement du corps à proximité de la surface extérieure du corps qui comprend un contact d'électrode inférieur, un transducteur piézo (ou piézoélément) un contact d'électrode supérieur, un isolateur ayant une surface supérieure convexe, et une douille supérieure qui est fixée au corps. La surface convexe de l'isolateur a pour fonction de réaliser un contact linéaire entre l'isolateur et la douille supérieure.

Selon un autre aspect, au lieu d'une surface supérieure convexe, l'isolateur comporte une surface supérieure qui présente au moins un chanfrein. Un chanfrein ou chaque chanfrein a également pour fonction de réaliser un contact linéaire entre l'isolateur et la douille supérieure.

Selon un autre aspect, chaque chanfrein a une longueur de chanfrein et un angle de chanfrein, et la position de l'axe de force le long de la surface supérieure de l'isolateur est fonction de la longueur du chanfrein et/ou de l'angle du chanfrein.

Selon un autre aspect, le transducteur piézo est un transducteur de type piézoélectrique ou piézorésistif.

Selon un autre aspect, le transducteur piézo est un transducteur piézoélectrique qui comprend une céramique piézo. La céramique piézo peut comprendre des titanates, des niobates, des tantalates, des tungstates ou du quartz.

Selon un autre aspect, le chanfrein ou chaque chanfrein a pour fonction d'établir une ligne de contact de force axiale entre une surface inférieure de la douille supérieure et la surface de dessus de l'isolateur.

Selon un autre aspect, le contact de l'électrode supérieure a une section transversale en forme de L.

Selon un autre aspect, la douille supérieure comporte un chambrage situé sur un diamètre intérieur de celle-ci.

Selon un autre aspect, le chambrage est placé dans une partie médiane de la douille supérieure.

Selon un autre aspect, le chambrage a un profil en section transversale ayant une forme trapézoïdale.

Selon un autre aspect, l'ensemble à piézocapteur a une fréquence effective de fonctionnement s'élevant jusqu'à environ 20 kHz, et plus particulièrement comprise entre 0,5 et 20 kHz.

Selon un autre aspect, l'invention concerne un procédé de réalisation d'une bougie d'allumage, comprenant les étapes qui consistent à :
former une bougie d'allumage comportant : un ensemble à électrode centrale comportant une tige de branchement à une extrémité et une électrode centrale ayant une surface d'éclatement à une extrémité opposée ; un isolateur globalement tubulaire entourant l'ensemble à électrode centrale ; et une enveloppe entourant l'isolateur et ayant, sur sa longueur, un retour sur une première extrémité, un corps ayant une surface extérieure et un épaulement de corps sur un rebord de garniture de celui-ci, une partie filetée et une électrode de masse,
insérer un ensemble à piézocapteur sur l'épaulement du corps à proximité de la surface extérieure du corps qui comprend un contact d'électrode inférieur, un transducteur piézo, un contact d'électrode supérieur, un isolateur ayant une surface supérieure convexe et une douille supérieure ; à précontraindre en compression l'ensemble à piézocapteur contre l'épaulement du corps ; et
fixer la douille supérieure au corps pour bloquer la précontrainte de l'ensemble à piézocapteur.

Ces caractéristiques et d'autres ainsi que les avantages de la présente invention ressortiront mieux de la description détaillée qui suit à titre d'exemple nullement limitatif, faite en référence aux dessins annexés sur lesquels :
la figure 1 est une vue de dessus d'une bougie d'allumage selon une forme de réalisation de l'invention ;
la figure 2 est une vue en coupe partielle de la bougie d'allumage suivant la ligne 2-2 de la figure 1 ;
la figure 3 est une vue de détail en coupe de la zone 3 de la figure 2 ;
la figure 4 est une vue en demi-coupe longitudinale de l'enveloppe de la figure 2 ;
la figure 5 est une vue en coupe axiale de l'isolateur de la figure 2 ;
la figure 6 est une vue en coupe axiale éclatée de l'ensemble à piézocapteur de la figure 2 ;

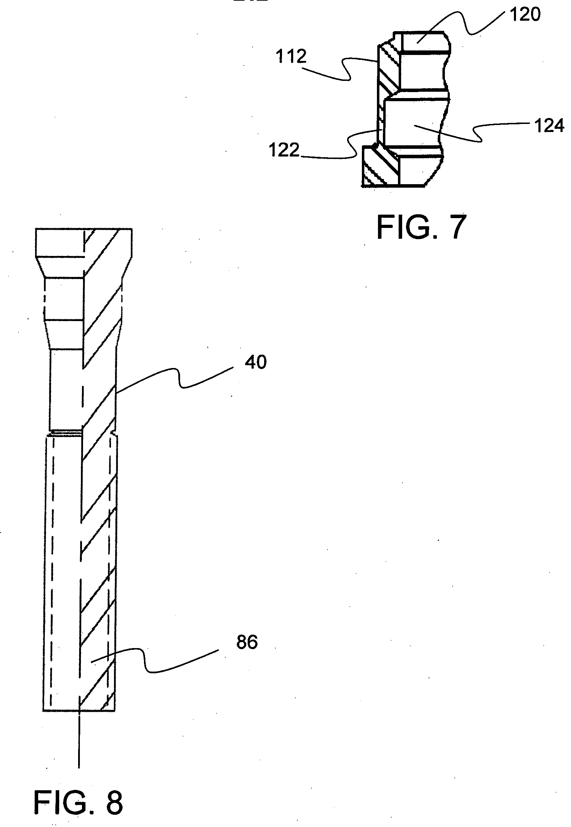

la figure 7 est une vue à échelle agrandie en coupe partielle suivant la ligne 7-7 de la figure 1 ;
la figure 8 est une vue en demi-coupe axiale de la tige de branchement de la figure 2 ; et
la figure 9 est une vue en coupe axiale d'une bougie d'allumage de l'art antérieur ayant un capteur de combustion intégré.

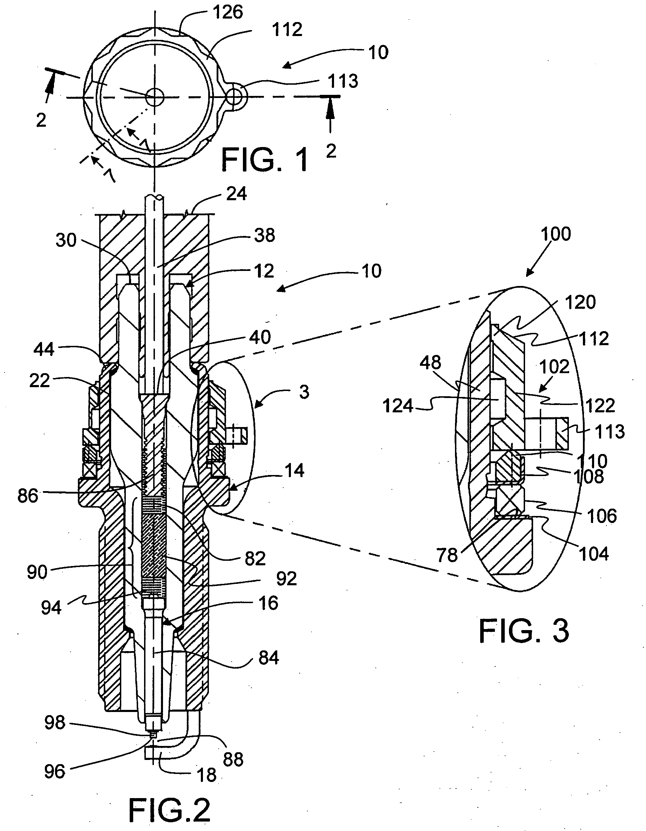

En référence aux figures, sur lesquelles les mêmes références numériques désignent des pièces analogues ou correspondantes sur les multiples vues, conformément à l'invention, une bougie d'allumage destinée à réaliser un allumage par étincelle et une détection des événements de combustion qui en résultent dans une application à un allumage par étincelle, par exemple dans un moteur à combustion interne, est repérée de façon générale par la référence 10 sur les figures 1 à 3. La bougie d'allumage 10 peut être utilisée avec tous les modes et toutes les conceptions de moteurs à combustion interne, comprenant des moteurs à essence, ainsi que ceux mus par d'autres carburants tels que le E85, le propane et analogues. La bougie d'allumage 10 comporte un isolateur repéré de façon générale par la référence 12, une enveloppe repérée de façon générale par la référence 14, et un ensemble à électrode centrale repéré de façon générale par la référence 16. L'enveloppe 14 est avantageusement réalisée en un alliage d'acier (par exemple de l'acier de nuance 1215) ou un matériau similaire et est configuré, comme décrit plus en détail ci-dessous, de façon à retenir ou emprisonner l'isolateur 12 et l'ensemble à électrode centrale 16. L'isolateur 12 est un élément électriquement isolant, de forme allongée, globalement cylindrique, ayant de nombreuses configurations possibles, mais comprenant généralement plusieurs diamètres en section transversale, une partie conique à l'extrémité où se produit l'étincelle et au moins un alésage central conçu pour recevoir en prise l'électrode centrale 16, et il est réalisé en alumine ou en une matière diélectrique pour hautes températures similaire. L'enveloppe 14 a une section qui comprend une électrode de masse 18 qui en fait saillie, comme décrit plus en détail ci-dessous. La figure 2 représente la bougie d'allumage 10 dans l'état assemblé à la suite d'un blocage à chaud de l'enveloppe et de l'isolateur, l'un à l'autre, comme décrit ici. Dans l'état totalement assemblé après le blocage à chaud tel que décrit ci-dessus, la zone déformable 20 de l'enveloppe 14 s'est au moins partiellement écrasée en réponse à un chauffage de cet élément associé à l'application d'une force de compression qui sollicite les parties de l'enveloppe 14, situées au-dessus et au-dessous de cet élément, jusqu'en contact sous pression avec l'isolateur 12.

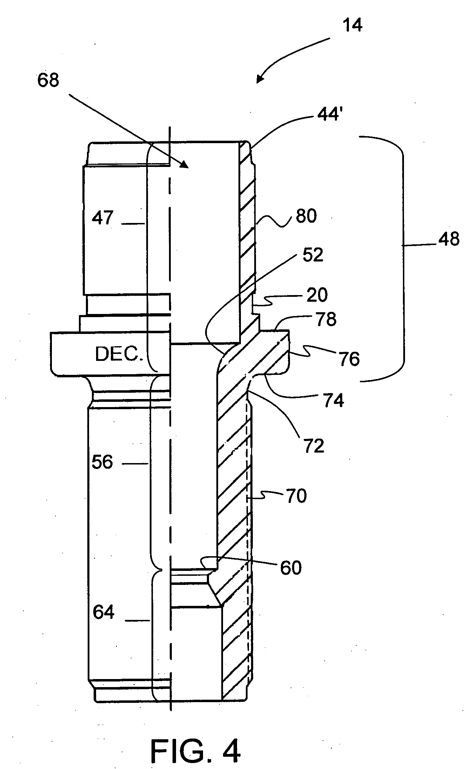

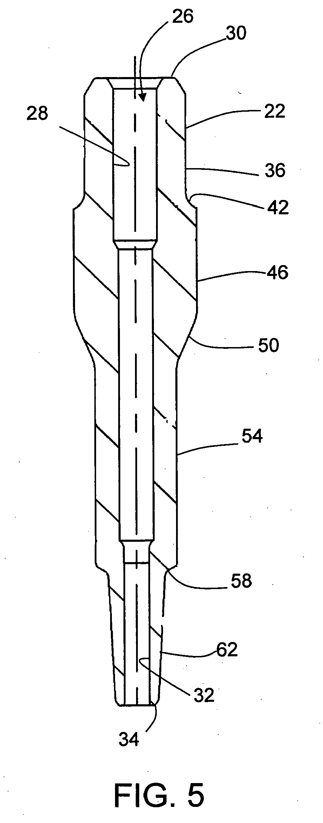

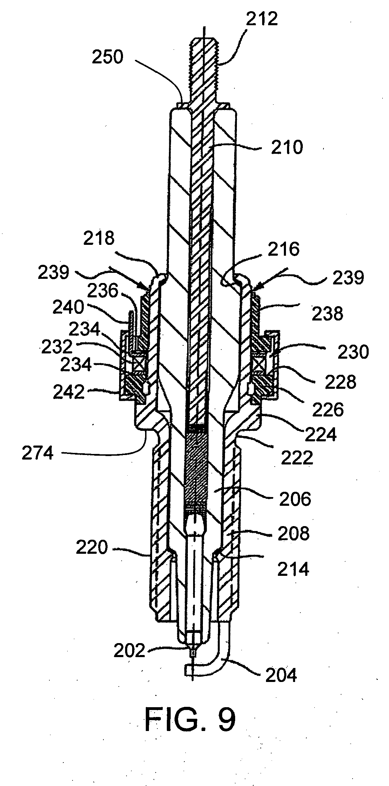

En référence aux figures 2 et 5, la bougie d'allumage 10 comprend un isolateur céramique tubulaire, portant de façon générale la référence 12, qui est avantageusement réalisé en une matière céramique telle que de l'oxyde d'aluminium, en particulier des mélanges d'oxyde d'aluminium, d'oxyde de zirconium et divers verres, des matières vitrifiables et d'autres agents de modification, comme décrit dans le document US-7 169 723, ou en un autre matériau approprié ayant une rigidité diélectrique spécifiée, une haute résistance mécanique, une haute conductivité thermique et une excellente résistance aux chocs thermiques convenant à une utilisation en tant que matière diélectrique dans l'environnement de fonctionnement à haute température d'un moteur à combustion interne. L'isolateur 12 peut être moulé à sec sous une pression extrême, puis fritté à une température élevée en utilisant des processus bien connus. L'isolateur 12 a une surface extérieure qui peut comprendre une partie de mât 22 supérieure partiellement à découvert qu'une coiffe de bougie 24 en matière synthétique entoure et enserre pour maintenir une connexion électrique fonctionnelle avec le système d'allumage. La partie de mât 22 exposée peut comporter une série de nervures (non représentées) pour assurer une protection supplémentaire contre des étincelles ou un "contournement" par une tension secondaire et pour améliorer la prise avec la coiffe de bougie. En comparaison avec la bougie d'allumage de l'art antérieur de la figure 9, l'isolateur 12 de la présente invention a un mât 22 sensiblement raccourci. Par exemple, la forme de réalisation de la figure 9 a une hauteur de l'isolateur, mesurée du côté inférieur du siège 224 de garniture jusqu'à l'extrémité terminale 250, d'environ 1,88 pouce (47,75 mm), alors que la hauteur de la même partie de la présente invention est d'environ 1,13 pouce (28,70 mm). L'isolateur 12 est de construction globalement tubulaire ou annulaire, comprenant un alésage ou passage central 26, s'étendant longitudinalement entre une partie supérieure 28 proche d'une extrémité terminale 30 et une partie inférieure 32 proche d'une extrémité de nez central 34. Le passage central 26 a une section transversale de diamètre variable, qui est généralement le plus grand à l'extrémité terminale 30 ou à proximité de celle-ci et le plus petit à l'extrémité de nez central 34 ou à proximité immédiate de celle-ci. En référence de nouveau aux figures 1 à 3 et 5, l'isolateur 12 globalement tubulaire entoure l'ensemble à électrode centrale 16 décrit ci-dessous. L'isolateur 12 comporte généralement une série continue de tronçons tubulaires de diamètre variable. Ces tronçons comprennent un premier tronçon 36 d'isolateur qui entoure le prolongement 38 de connecteur de la tige de branchement 40 de l'ensemble à électrode centrale 16. Ce premier tronçon 36 d'isolateur se rattache à un premier épaulement 42 d'isolateur qui est en contact sous pression avec le retour 44 (voir la figure 2 en position montée et la figure 4 avant déformation) de l'enveloppe 14 et qui se prolonge lui-même par un second tronçon 46 d'isolateur. Le second tronçon 46 d'isolateur a un diamètre supérieur au diamètre du premier tronçon 36 d'isolateur et est logé dans un premier tronçon 47 d'alésage à l'intérieur d'un corps 48 de l'enveloppe 14. Un deuxième épaulement 50 d'isolateur est espacé d'un premier épaulement 52 de l'enveloppe et se prolonge par un troisième tronçon 54 d'isolateur. Le troisième tronçon 54 d'isolateur a avantageusement un diamètre inférieur au diamètre du deuxième tronçon 46 d'isolateur, et généralement inférieur au diamètre du premier tronçon 36 d'isolateur, et est logé dans un deuxième tronçon 56 de l'enveloppe. Un troisième épaulement 58 d'isolateur est en contact sous pression avec un deuxième épaulement 60 de l'enveloppe et se prolonge par un nez central 62 conique, qui est partiellement placé à l'intérieur d'un troisième tronçon 64 de l'enveloppe dont il fait saillie. Le nez central 62 loge une électrode centrale 84. La forme de réalisation d'isolateur 12 illustrée sur les figures 2 et 5, ainsi que sa relation mutuelle avec certains autres éléments tels que l'enveloppe et l'ensemble à électrode centrale 16 est donnée à titre d'exemple non limitatif et d'autres configurations de l'isolateur 12 et de ces éléments sont possibles sans sortir du cadre de l'invention.

Comme illustré de façon générale sur les figures 2 et 4, une enveloppe électriquement conductrice, avantageusement métallique, est repérée de façon générale par la référence 14. L'enveloppe 14 peut être réalisée en tout métal convenable, comme par exemple divers alliages d'acier revêtus et non revêtus, tel que l'acier de nuance 1215. L'enveloppe 14 peut être revêtue par dépôt ou autre application de revêtements protecteurs tels que du Ni ou des alliages de Ni. L'enveloppe 14 présente une surface intérieure ou un alésage 68 globalement annulaire qui entoure la surface extérieure de l'isolateur 12 et est conçue pour entrer en contact sous pression et étanche avec la surface extérieure de l'isolateur 12, comme décrit ici, et comprend au moins une électrode de masse 18, laquelle peut être fixée comme représenté sur la figure 2 ou peut comprendre l'extrémité de l'enveloppe 14 qui est proche de l'électrode centrale 84. L'enveloppe 14 entoure les tronçons inférieurs, comprenant le deuxième tronçon 46, le troisième tronçon 54 et le tronçon de nez central 62 de l'isolateur 12, et comprend au moins une électrode de masse 18. Bien que l'électrode de masse 18 soit représentée en forme classique de L unique sur la figure 2, on appréciera que multiples électrodes de masse de diverses configurations en L, droites ou coudées, peuvent être substituées suivant la configuration d'électrode de masse souhaitée et l'application prévue pour la bougie d'allumage 10.

L'enveloppe 14 comporte également un rebord intérieur inférieur ou deuxième épaulement 60 de compression conçu pour porter en contact de pression contre le troisième épaulement 58 de l'isolateur 12. L'enveloppe 14 comporte en outre un rebord ou retour supérieur 44 de compression qui est serti ou formé d'une autre manière, pendant l'opération d'assemblage, pour porter en contact sous pression contre le premier épaulement 42 de l'isolateur 12. Ceci est réalisé à partir d'une partie d'épaulement 44' du corps 48 qui est représentée sur la figure 4 avant déformation. Comme indiqué, l'enveloppe 14 peut également comprendre une zone déformable 20 qui est conçue et adaptée à s'écraser axialement et radialement vers l'intérieur en réponse à un chauffage de la zone déformable 20 et à l'application associée d'une force de compression axiale écrasante après la déformation du retour 44 pour maintenir l'enveloppe 14 dans une position axiale fixe par rapport à l'isolateur 12 et pour former un joint étanche aux gaz entre l'isolateur 12 et l'enveloppe 14. Des joints, de la colle ou d'autres composés d'étanchéité peuvent être interposés entre l'isolateur 12 et l'enveloppe 14 pour assurer une étanchéité parfaite aux gaz et améliorer l'intégrité de la structure de la bougie d'allumage 10 assemblée.

La surface extérieure de l'enveloppe 14 comporte une partie filetée 70 qui est utilisée pour le vissage de la bougie d'allumage dans une culasse. Une contre-dépouille 72 de filetage, située au-dessus de la partie filetée 70, réalise une transition entre la zone filetée 70 et le corps 48. La contre-dépouille 72 de filetage se prolonge par un siège 74 de garniture sur un rebord 76 de garniture du corps 48 qui est plus large que la partie restante du corps 48 et se rétrécit par l'intermédiaire d'un épaulement 78 du corps jusqu'à une partie supérieure 80 du corps 48. Le siège 74 de garniture est conçu pour s'appliquer en appui contre un siège complémentaire situé dans un puits de bougie dans la culasse. Le siège 74 de garniture peut être un épaulement carré coopérant avec une garniture (non représentée) pour réaliser une interface appropriée contre laquelle la bougie d'allumage 10 s'applique dans la culasse et assure l'étanchéité aux gaz chauds de l'espace entre la surface extérieure l'enveloppe 14 et le trou taraudé de l'ouverture (non représentée) dans la chambre de combustion. En variante, le siège 74 de garniture peut être conçu de façon à être un siège conique pour permettre une mise en place avec une tolérance étroite et une étanchéité s'établissant d'elle-même dans une culasse qui est également conçue habituellement de façon à présenter une conicité complémentaire pour ce type de bougie d'allumage.

Comme illustré sur les figures 2, 4 et 5, l'enveloppe 14 a un alésage annulaire 68 ayant des tronçons de diamètres variés. Ils comprennent le premier tronçon 47 d'alésage associé au corps 48. Le premier épaulement 52 de l'enveloppe s'étend vers l'intérieur depuis le premier tronçon 47 de l'alésage et est espacé, comme montré, du deuxième épaulement 50 de l'isolateur et se prolonge, lui-même, par le deuxième tronçon 56 d'alésage. Le deuxième tronçon 56 d'alésage est associé à la portion supérieure de la partie filetée 70. Le deuxième épaulement 60 de l'enveloppe s'étend depuis le second tronçon 56 et est conçu pour entrer en contact sous pression avec le troisième épaulement 58 de l'isolateur. Le deuxième épaulement 60 de l'enveloppe se prolonge vers l'intérieur et vers le bas par le troisième tronçon 64 de l'enveloppe qui est associé à la portion inférieure de la partie filetée 70 et a un diamètre intérieur supérieur à celui du deuxième tronçon 56 de l'enveloppe.

Bien que l'on donne ci-dessus une description de la forme de réalisation de l'enveloppe 14 illustrée sur les figures 2, 4 et 5, ainsi que sa relation avec certains autres éléments tels que l'isolateur 12 et l'ensemble à électrode centrale 16, d'autres configurations de l'enveloppe 14 et de ces éléments sont possibles conformément à la présente invention ; cependant, le corps 48 et l'épaulement 78 du corps, similaires en configuration et en fonction à ceux décrits ci-dessus, constitueraient une partie de ces autres formes de réalisation de l'enveloppe 14.

A la différence de la plupart des enveloppes de bougies d'allumage, l'enveloppe 14 ne comporte pas de partie de fixation sur une partie supérieure du corps 48, telle qu'une partie hexagonale de réception d'un outil ou une autre configuration pour l'enlèvement et la mise en place de la bougie d'allumage dans un trou de chambre de combustion. La surface extérieure du corps est cylindrique. Une partie de fixation est plutôt incorporée dans l'ensemble à capteur comme montré ci-dessous.

Comme représenté sur la figure 2, l'ensemble à électrode centrale 16 comprend une tige de branchement 40, un bloc 90 à résistance électriquement conducteur et une électrode centrale 84. La tige de branchement 40 électriquement conductrice est disposée dans le passage central 26 de l'isolateur 12 et s'étend longitudinalement jusqu'à une extrémité inférieure 86 qui descend partiellement et est encastrée dans le passage central 26. La tige de branchement 40 est conçue et mise en oeuvre pour une connexion électrique sur une borne 38 de fil d'allumage et reçoit, à des instants appropriés, des décharges électriques de haute tension nécessaires pour allumer ou faire fonctionner la bougie 10 en générant une étincelle au niveau d'un écartement d'électrodes 88.

L'extrémité inférieure 86 de la tige de branchement 40 est encastrée dans un joint conducteur 82 d'étanchéité en verre, formant la couche supérieure du bloc 90 à antiparasite-joint d'étanchéité composite à trois couches. Le joint conducteur 82 d'étanchéité en verre fonctionne de façon à sceller l'extrémité inférieure 86 de la tige de branchement 40 et à la connecter électriquement à une couche à résistance 92. Cette couche à résistance 92, qui comprend la couche centrale et l'antiparasite du bloc 90 antiparasite-joint d'étanchéité à trois couches, peut être formée de toute composition convenable. Suivant l'installation recommandée et le type de système d'allumage utilisé, de telles couches à résistance 92 peuvent être conçues pour fonctionner essentiellement à la manière d'un antiparasite à résistance classique ou bien, en variante, en tant que basse résistance. Immédiatement au-dessous de la couche à résistance 92, un second joint d'étanchéité conducteur 94 en verre établit la couche de dessous ou inférieure du bloc 90 à antiparasite-joint d'étanchéité et connecte électriquement la tige de branchement 40 et le bloc 90 à antiparasite-joint d'étanchéité à l'électrode centrale 84. La couche supérieure 82 et la couche inférieure 94 peuvent être formées de la même matière conductrice ou de matières conductrices différentes. De nombreuses autres configurations de joints d'étanchéité en verre et autres et d'antiparasites à résistance et à induction sont bien connues et peuvent également être utilisées dans l'ensemble à électrode centrale selon l'invention. De nombreuses autres configurations de la tige de branchement 40 et de l'électrode centrale 84 sont également possibles conformément à l'invention. En conséquence, l'ensemble à électrode centrale 16 a pour fonction de transférer de l'électricité du système d'allumage en passant par l'ensemble à électrode centrale 16 pour atteindre l'écartement d'électrodes 88 et de procurer la source d'étincelles pour la combustion par allumage commandé.

Comme montré sur la figure 2, l'électrode centrale 84 conductrice est partiellement disposée dans le passage central 26 et s'étend longitudinalement depuis sa tête qui est logée dans la couche d'étanchéité inférieure 94 en verre jusqu'à son extrémité 96 exposée aux étincelles et proche de l'électrode de masse 18. Le bloc 90 antiparasite-joint d'étanchéité interconnecte électriquement la tige de branchement 40 et l'électrode centrale 84, tout en fermant de façon étanche le passage central 26 contre toute fuite de gaz de combustion et en arrêtant aussi les émissions de parasites radiofréquences depuis la bougie d'allumage 10. L'électrode centrale conductrice 84 est avantageusement formée d'une matière électriquement conductrice qui associe une haute conductivité thermique à une haute résistance à la chaleur et une haute résistance à la corrosion. Des matières appropriées pour l'électrode centrale conductrice 84 comprennent divers alliages à base de nickel, comprenant plusieurs alliages nickel-chrome-fer, tels que ceux désignés de façon générale par UNS N06600 et vendus sous les marques commerciales Inconel 600®, Nicrofer 7615® et Ferrochronin 600®, ainsi que divers alliages de nickel dilués, tels que ceux comprenant au moins 92 % en poids de nickel ; et au moins un élément du groupe constitué de l'aluminium, du silicium, du chrome, du titane et du manganèse. Ces alliages peuvent également comprendre des additions d'alliages constitués de terres rares pour améliorer certaines propriétés aux températures élevées des alliages, tels que, par exemple, au moins un élément des terres rares choisi dans le groupe constitué de l'yttrium, de l'hafnium, du lanthane, du cérium et du néodyme. Ils peuvent également comprendre de petites quantités de zirconium et de bore pour renforcer encore leurs propriétés aux températures élevées.

L'une ou l'autre de l'électrode de masse 18 et de l'électrode centrale 84, ou les deux, peuvent également être pourvues d'une âme (non représentée) conductrice de la chaleur. L'âme conductrice de la chaleur peut être formée d'une matière à haute conductivité thermique (par exemple > 250 W/M*°K) telle du cuivre ou de l'argent ou divers alliages de chacun d'eux. Des âmes à haute conductivité thermique servent de dissipateurs de chaleur et aident à évacuer la chaleur de la zone d'écartement d'électrodes 88 pendant le fonctionnement de la bougie d'allumage 10 et les processus de combustion associés, abaissant ainsi la température de fonctionnement des électrodes dans cette zone et améliorant en outre leur comportement et leur résistance aux processus de dégradation thermique, tels qu'une oxydation et une corrosion sous haute température.

Une pointe d'allumage 98 peut être placée facultativement à l'extrémité d'éclatement 96 de l'électrode centrale 84, ou de l'électrode de masse 18 comme montré sur la figure 2. La pointe d'allumage 98 présente une surface d'éclatement pour l'émission d'électrons à travers l'écartement d'électrodes 88. La pointe d'allumage 98 pour l'électrode centrale 84 ou l'électrode de masse 18 peut être réalisée conformément à l'une quelconque des techniques connues, comprenant la formation d'une pièce séparée et la fixation subséquente, par diverses combinaisons de soudage par résistance, de soudage par laser ou de combinaisons de ceux-ci, d'un élément analogue à un plot, analogue à un fil ou analogue à un rivet formé de l'un quelconque des métaux précieux ou alliages à haute performance connus comprenant, à titre non limitatif, l'or, un alliage d'or, un métal du groupe du platine ou un alliage de tungstène, des alliages d'or, comprenant des alliages Au-Pd, tels que des alliages Au-40Pd (pourcentage en poids). Des métaux du groupe du platine comprennent : le platine, l'iridium, le rhodium, le palladium, le ruthénium et le rhénium, et divers de leurs alliages dans toute combinaison. Aux fins de cette application, du rhénium est également inclus dans la définition des métaux du groupe du platine en raison de son haut point de fusion et d'autres caractéristiques à haute température similaires à celles de certains des métaux du groupe du platine. Les pointes d'allumage 98 peuvent également être formées de divers alliages de tungstène, comprenant des alliages W-Ni, W-Cu et W-Ni-Cu. Des éléments d'alliage supplémentaires pour une utilisation dans des pointes d'allumage 98 peuvent comprendre, à titre non limitatif, du nickel, du chrome, du fer, du manganèse, du cuivre, de l'aluminium, du cobalt, du tungstène, du zirconium et des éléments des terres rares comprenant l'yttrium, le lanthane, le cérium et le néodyme. En fait, n'importe quelles matières qui procurent de bonnes performances en érosion et en corrosion dans l'environnement de combustion peuvent convenir à une utilisation dans la composition des matières de la pointe d'allumage 98.

En référence aux figures 1, 2, 3 et 6, la partie de génération d'étincelles de la bougie d'allumage 10 ayant été décrite, la bougie d'allumage comprend aussi un capteur de pression 100 intégré. Le capteur de pression est un ensemble capteur 102 de type piézo qui peut fonctionner en tant que transducteur de pression pour convertir une énergie mécanique de déformation élastique induite dans la bougie d'allumage par une variation de la pression dans le cylindre en un signal électrique qui peut être délivré en sortie de l'ensemble à capteur et fournir ainsi une information importante concernant les événements de combustion, laquelle est à son tour utilisée pour diverses fonctions de commande du véhicule. L'ensemble piézocapteur peut être un ensemble à capteur piézoélectrique qui produit une tension de sortie variable en tant que signal de capteur, ou un ensemble à capteur piézorésistif qui produit une résistance variable en tant que signal de capteur, suivant le piézoélément choisi.

L'ensemble piézocapteur 102 est en appui sur l'épaulement 78 du corps et s'étend le long de la partie supérieure 80 du corps 48. L'ensemble piézocapteur 102 comprend un contact d'électrode inférieur 104, un piézoélément 106, un contact d'électrode supérieur 108, un isolateur 110 et une douille supérieure 112. Ces éléments sont placés sur le corps 48 dans l'ordre indiqué ci-dessus et sont reliés fonctionnellement entre eux par l'application d'une précontrainte d'assemblage sous compression et maintenus assemblés sous la précontrainte d'assemblage par soudage de la douille supérieure 112 au corps 48.

Le contact d'électrode inférieur 104 se présente sous la forme d'un anneau mince ayant un diamètre intérieur qui est plus grand que le diamètre extérieur du corps 48 afin que le contact d'électrode inférieur 104 puisse être assemblé en étant placé sur le corps 48. Le diamètre extérieur du contact d'électrode inférieur 104 est dimensionné de façon appropriée conjointement avec l'épaulement 78 du corps pour lui permettre de reposer sur l'épaulement 78 du corps. Cet épaulement 78 est également d'une épaisseur appropriée, de sorte qu'il n'est soumis à aucune déformation plastique sous l'effet de la précharge d'assemblage. Dans un exemple de forme de réalisation, l'épaulement du corps a un diamètre extérieur de 0,75 pouce (19,05 mm) et le contact d'électrode inférieur 104 a un diamètre extérieur d'environ 0,71 pouce (18,03 mm). Dans l'exemple de forme de réalisation indiqué, la largeur (le long du diamètre) du contact d'électrode inférieur 104 est d'environ 0,07 pouce (1,78 mm) et l'épaisseur est d'environ 0,019 pouce (0,483 mm). Le contact d'électrode inférieur 104 peut être réalisé en n'importe quelle matière électriquement conductrice convenable, comprenant de nombreux métaux purs et alliages. On préfère cependant que le contact d'électrode inférieur 104 soit formé d'une matière conductrice qui ne se dégrade pas aisément au niveau de ses propriétés en tant que contact électrique dans l'environnement de fonctionnement d'un moteur, ces propriétés comprenant une résistance aux processus d'oxydation et de corrosion à haute température, connus comme ayant lieu dans ces environnements. Dans l'exemple de forme de réalisation indiqué, le contact d'électrode inférieur 104 est réalisé en laiton. La surface inférieure du contact d'électrode inférieur 104 est en appui sur l'épaulement 78 du corps et la surface supérieure procure le siège mécanique et le contact électrique pour le piézoélément 106.

Le piézoélément 106 se présente sous la forme d'un anneau ou disque cylindrique. Bien que de nombreuses configurations en coupe transversales soient considérées comme possibles, le piézoélément 106 peut avoir une section transversale rectangulaire, y compris une section transversale carrée. Dans le cas où il est rectangulaire, il peut également comporter de légers chanfreins ou rayons aux angles du rectangle. Le piézoélément 106 peut être soit un élément piézoélectrique qui fonctionne de façon à produire une tension de sortie variable en tant que signal de capteur, soit un élément piézorésistif qui fonctionne de façon à produire une résistance variable en tant que signal de capteur. Le piézoélément 106 a un diamètre qui est plus grand que le diamètre extérieur du corps 48 afin qu'il puisse être assemblé en étant mis en place sur le corps 48, et il est dimensionné de façon à ne pas entrer en contact avec le corps 48 pendant la fabrication et le fonctionnement de l'ensemble piézocapteur 102, évitant ainsi des pertes par frottement associées au mouvement du piézoélément 106. Les diamètres intérieur et extérieur du piézoélément 106 sont dimensionnés de façon appropriée conjointement avec le contact d'électrode inférieur 104 afin de permettre à la surface inférieure du piézoélément 106 de reposer sur la surface supérieure du contact d'électrode inférieur 104. La même relation de diamètres s'applique au contact entre la surface supérieure du piézoélément 106 et la surface inférieure du contact d'électrode supérieur 108. Dans un exemple de forme de réalisation, le piézoélément 106 a un diamètre extérieur d'environ 0,708 pouce (17,983 mm). Dans l'exemple de forme de réalisation indiqué, la largeur (suivant le diamètre) du capteur piézo 106 est d'environ 0,069 pouce (1,753 mm) et l'épaisseur est d'environ 0,079 pouce (2,007 mm). Le piézoélément 106 peut être formé de tout matériau piézoélectrique ou piézorésistif convenable. Dans l'exemple de forme de réalisation indiqué, le piézoélément 106 est un élément piézoélectrique formé d'une piézocéramique. La piézocéramique peut comprendre des titanates, des niobates, des tantalates, des tungstates ou du quartz.

Le contact d'électrode supérieur 108 a la configuration d'un anneau en forme de L ayant un diamètre intérieur qui est plus grand que le diamètre extérieur du corps 48 afin que le contact d'électrode supérieur 108 puisse être assemblé en étant placé sur le corps 48. Le diamètre intérieur est dimensionné de façon à rester espacé et électriquement isolé de la surface extérieure du corps 48. Le diamètre extérieur du contact d'électrode supérieur 108 est dimensionné de façon appropriée conjointement avec la surface supérieure du piézoélément 106 pour permettre à la surface inférieure du contact d'électrode supérieur 108 de recouvrir la surface supérieure du piézoélément 106. Dans l'exemple de forme de réalisation indiqué, le contact d'électrode supérieur 108 a un diamètre extérieur d'environ 0,708 pouce (17,983 mm). La largeur (suivant le diamètre) du contact d'électrode supérieur 108 est d'environ 0,069 pouce (1,753 mm) et la hauteur de la branche de forme en L est d'environ 0,070 pouce (1,778 mm). L'épaisseur du contact d'électrode supérieur 108 est d'environ 0,008 pouce (0,203 mm). Le contact d'électrode supérieur 108 peut être réalisé en n'importe quelle matière conductrice convenable, comprenant de nombreux métaux purs et alliages. On préfère cependant aussi que le contact d'électrode supérieur 108 soit formée d'une matière conductrice dont ses propriétés, par exemple électriques, ne se dégradent pas aisément dans l'environnement de fonctionnement d'un moteur, de telles propriétés comprenant une résistance aux processus d'oxydation et de corrosion sous haute température connus comme ayant lieu dans ces environnements. Dans l'exemple de forme de réalisation indiqué, le contact d'électrode supérieur 108 est réalisé en laiton. La surface inférieure du contact d'électrode supérieur 108 est en appui sur la surface supérieure du piézoélément 106 et la surface inférieure constitue à la fois le siège mécanique et le contact électrique pour le piézoélément 106. Le contact électrique avec l'ensemble piézocapteur 102 pour la transmission du signal électrique délivré en sortie de l'ensemble est réalisé par l'intermédiaire du contact d'électrode supérieur 108, réalisant avantageusement un contact électrique convenable avec un fil de signal (non représenté). On peut utiliser n'importe quelle forme convenable de contact électrique, telle qu'un câble coaxial blindé.

L'isolateur 110 se présente sous la forme d'un anneau ou disque cylindrique chanfreiné. Bien que de nombreuses configurations en section transversale soient considérées comme possibles, l'isolateur 110 peut avoir une section transversale globalement rectangulaire, y compris une section transversale carrée, avec une surface inférieure plate et une surface supérieure convexe, ou une surface supérieure qui est tronquée par au moins un chanfrein 114. Dans le cas où il est rectangulaire, il peut également comprendre un petit chanfrein ou rayon 116 à un ou plusieurs des angles du rectangle. L'isolateur 110 peut être réalisé en n'importe quelle matière électriquement isolante qui a pour effet d'isoler électriquement le contact d'électrode supérieur 108 et le piézoélément 106. L'isolateur 110 est également un actionneur mécanique transférant de l'énergie mécanique dans le contact d'électrode supérieur 108 et le piézoélément 106, et il est avantageusement formé d'une matière à haut module d'élasticité aux températures de fonctionnement du moteur, en particulier en compression, telle qu'une céramique. L'isolateur 110 a un diamètre qui est plus grand que le diamètre extérieur du corps 48 afin que l'isolateur 110 puisse être assemblé en étant placé sur le corps 48, et il est dimensionné de façon à ne pas entrer en contact avec le corps 48 pendant la fabrication et le fonctionnement de l'ensemble piézocapteur 102, évitant ainsi les pertes par frottement associées au mouvement de l'isolateur 110. Les diamètre intérieur et extérieur de l'isolateur 110 sont dimensionnés de façon appropriée conjointement avec le contact d'électrode supérieur 108 afin de permettre à la surface inférieure de l'isolateur 110 de reposer sur la surface supérieure du contact d'électrode supérieur 108, tout en s'ajustant aussi dans la branche de forme en L du contact d'électrode supérieur 108. Dans un exemple de forme de réalisation, l'isolateur 110 a un diamètre extérieur d'environ 0,690 pouce (17,526 mm). Dans l'exemple de forme de réalisation indiqué, la largeur (suivant le diamètre) de l'isolateur 110 est d'environ 0,06 pouce (1,52 mm) et l'épaisseur est d'environ 0,066 pouce (1,676 mm). La hauteur est suffisamment grande pour établir une isolation électrique et mécanique de la branche de forme en L du contact d'électrode supérieur 108 par rapport à la douille supérieure 112. L'isolateur 110 peut être formé de n'importe quelle matière diélectrique convenable. Dans l'exemple de forme de réalisation indiqué, l'isolateur 110 est formé d'une céramique à base d'alumine, telle que celle utilisée pour l'isolateur 12. Le chanfrein 114 a pour fonction de maîtriser l'application axiale d'une force de compression depuis la douille supérieure 112 dans le piézoélément 106 en passant par l'isolateur 110. Le chanfrein 114 peut modifier l'application d'une force à travers la totalité de la surface supérieure de l'isolateur 110 à une étendue de surface réduite et même à un contact de force linéaire 118. En modifiant le nombre de chanfreins, la longueur des chanfreins et leur angle, on peut assurer le contact linéaire, et on peut décaler l'axe de la ligne de force 118 vers l'intérieur ou vers l'extérieur. En limitant le contact à un contact linéaire, on peut réduire l'application de forces radiales associées aux éléments du capteur, y compris celles associées à une différence de dilatation thermique entre les éléments. De plus, l'application des forces axiales peut être maîtrisée de façon plus précise quant à l'emplacement de l'application des forces ainsi que l'amplitude des forces appliquées. En réduisant l'étendue de la surface de contact, on réduit aussi le manque d'uniformité des forces appliquées à travers la surface aux constituants associés.

La douille supérieure 112 porte contre la surface extérieure du corps 48 à laquelle elle est soudée. Les éléments de l'ensemble piézocapteur 102 sont en contact physique sous une précontrainte de compression due à une pression appliquée depuis la douille supérieure 112 à la surface supérieure de l'isolateur 110. Le soudage de la douille supérieure 112 au corps fixe la précontrainte. La douille supérieure 112 se présente sous la forme d'un anneau cylindrique ayant un diamètre intérieur qui est plus grand que le diamètre extérieur du corps 48 afin que la douille supérieure 112 puisse être assemblée en étant mise en place sur le corps 48. La douille supérieure comporte une lèvre d'alignement 120 s'étendant vers l'intérieur. Le diamètre au niveau de la lèvre est légèrement inférieur au diamètre extérieur du corps afin d'établir un léger serrage et d'aider à l'alignement concentrique de la douille supérieure 112. La forme annulaire cylindrique de la douille supérieure 112 a une section amincie 122 qui est amincie par l'incorporation d'un chambrage 124 sur le diamètre intérieur du tronçon médian de la douille. Le chambrage 124 peut avoir tout profil approprié. Dans l'exemple de forme de réalisation indiqué, le chambrage 124 a un profil trapézoïdal en section. Par l'incorporation du tronçon aminci 122 dans la douille supérieure 112, on augmente la flexibilité de la douille supérieure 112, procurant ainsi à la douille supérieure 112 une caractéristique de réponse radiale analogue à celle d'un ressort. En référence à la figure 1, la surface extérieure de la douille supérieure 112 comporte une configuration de fixation 126 appropriée de la bougie d'allumage, telle qu'hexagonale ou bihexagonale. La taille de la configuration est avantageusement conforme à une taille d'outil standard dans l'industrie pour l'application à la bougie d'allumage associée. Certaines applications peuvent évidemment faire appel à une interface de réception d'outil autre qu'un hexagone, telle que des fentes pour recevoir une clé tricoise, ou d'autres configurations telles qu'elles sont connues dans des applications à des bougies de compétition et autres et dans d'autres environnements. La douille supérieure 112 peut également comporter une patte 113 qui peut être utilisée pour la fixation d'un câble et d'un connecteur de signal (non représentés) utilisés pour la transmission du signal de sortie de l'ensemble à piézocapteur 102 à un dispositif de traitement de signal, tel qu'une unité de commande du moteur ou un autre dispositif de diagnostic du moteur. En variante, la douille supérieure 112 peut également être réalisée sans la patte 113. Dans l'exemple de forme de réalisation indiqué, la hauteur de la douille supérieure 112 est d'environ 0,320 pouce (8,128 mm). L'épaisseur de la douille varie, y compris l'épaisseur de la partie amincie 122, de fait des configurations hexagonales fraisées, mais dans les tronçons les plus épais, correspondant aux pointes de l'hexagone, elle est d'environ 0,080 pouce (2,032 mm). Le chambrage trapézoïdal 124 a une largeur d'environ 0,100 à 0,132 pouce (2,54 à 3,353 mm) et une profondeur d'environ 0,032 pouce (0,813 mm). La douille supérieure 112 peut être réalisée en n'importe quelle matière convenable, y compris diverses qualités d'acier et d'acier plaqué. On préfère cependant que la douille supérieure 112 soit réalisée en une matière ayant un coefficient de dilatation thermique inférieur à celui de l'acier et aussi proche que possible de celui de la matière céramique de l'isolateur, telle que du Kovar, qui a également un comportement amélioré dans l'environnement de fonctionnement d'un moteur, y compris une résistance aux processus d'oxydation et de corrosion sous température élevée connus comme ayant lieu dans ces environnements. Le Kovar est un alliage nickel-cobalt-fer ayant une composition nominale, en poids, d'environ 29 % de Ni, 17 % de Co, 0,30 % de Mn, 0,20 % de Si et 0,02 % de C, et le reste constitué de Fe. Dans l'exemple de forme de réalisation indiqué, la douille supérieure 112 est réalisée en Kovar. La surface inférieure de la douille supérieure 112 est en appui sur la surface supérieure de l'isolateur 110 et constitue le siège mécanique pour l'isolateur 110.

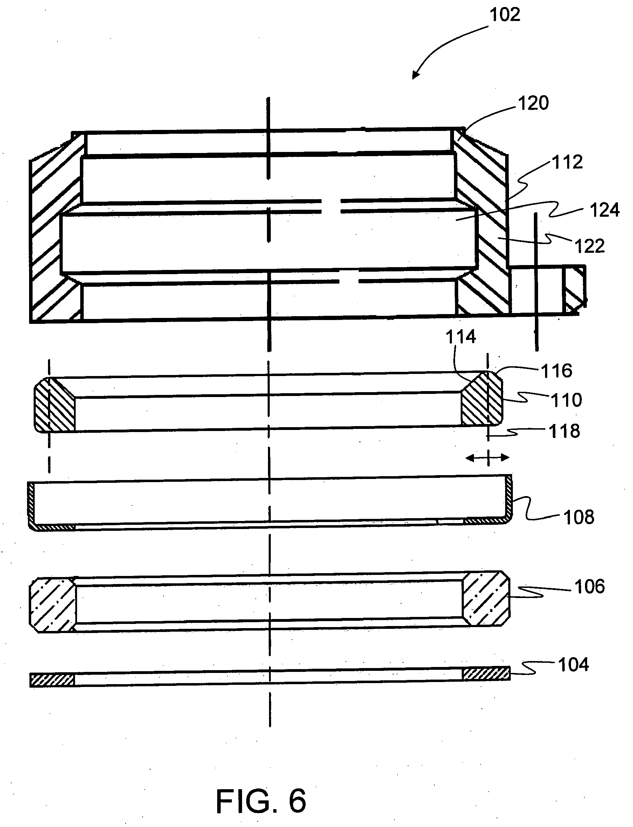

Les éléments de l'ensemble piézocapteur sont assemblés sur le corps comme montré sur les figures 3 et 6 et comme décrit ici. Ils sont soumis à une précontrainte de compression d'environ 360 livres (1600 N), puis la douille supérieure 112 est soudée par laser au corps 48 afin de fixer la précontrainte d'assemblage. Pendant le fonctionnement de la bougie d'allumage 10 à capteur de pression 100 intégré dans un moteur à combustion interne, à chaque combustion du mélange de carburant et d'air, la pression des gaz de combustion qui se détendent tend à pousser axialement vers l'extérieur contre l'isolateur 12 depuis la zone d'écartement des électrodes 88. Ceci fait porter l'isolateur 12 contre l'enveloppe 14 dans le retour 44 et provoque une déformation élastique périodique en traction du corps 48 opposé à l'ensemble piézocapteur 102. Cet étirement élastique en traction de l'enveloppe 14 pendant une phase de combustion réduit aussi périodiquement la précontrainte d'assemblage de l'ensemble piézocapteur 102 et produit un signal électrique qui est lié à la pression exercée par les gaz de combustion et peut être délivré en sortie par l'intermédiaire de l'électrode de contact supérieur 108.

Des conceptions de bougies d'allumage de l'art antérieur ayant des capteurs de combustion intégrés, telles que celles décrites ci-dessus et représentées sur la figure 9, utilisaient toutes un agencement classique de mât et tige de branchement de bougie d'allumage, de sorte que la tige s'étend au-dessus du mât de l'isolateur. Ces conceptions n'ont pas mis l'accent sur la maîtrise de la masse pendulaire de la partie supérieure de la bougie d'allumage, en particulier la partie placée au-dessus du siège 74 de garniture. La Demanderesse a observé que des conceptions ayant une masse pendulaire plus élevée dans la partie supérieure de la bougie d'allumage 10 sont soumises à une oscillation radiale accrue de cette partie de la bougie d'allumage 10 pendant le fonctionnement de la bougie et du moteur. Cette oscillation radiale a un effet négatif sur le fonctionnement de l'ensemble piézocapteur en réduisant le rapport signal/bruit du signal de sortie. Bien qu'il soit possible de filtrer ou d'amortir le signal de sortie du capteur, ceci aboutit habituellement à une réduction de la bande passante de la réponse du capteur. Par exemple, l'utilisation d'un filtre coupant à 10 kHz dans des dispositifs de l'art antérieur élimine leur utilité en tant que capteurs de cliquetis, car de tels capteurs fonctionnent habituellement dans la région d'environ 13 kHz. En revanche, la présente invention, qui présente une masse pendulaire réduite et une résistance accrue au contournement (décharges indésirables sur la surface du mât 22) grâce au mât raccourci de l'isolateur et à l'élimination d'une tige de branchement qui s'étend au-dessus du mât de l'isolateur, ainsi que dans la partie supérieure du passage central 26, a une bande passante de fonctionnement amélioré, comprise entre environ 0,5 et 20 kHz, élargissant et améliorant l'utilité du capteur. En comparaison avec la conception montrée sur la figure 9, la présente invention présente aussi une réponse thermique améliorée. Cette réponse thermique améliorée est associée à une dérive réduite du signal de sortie liée à la dilatation thermique des éléments du capteur. L'utilisation de Kovar pour la douille supérieure 112, ainsi que la conception de la douille supérieure 112 afin qu'elle comprenne un tronçon mince 122, de même que la forme de l'isolateur 110, sont considérées comme à l'origine de la réponse thermique améliorée de l'ensemble piézocapteur 102.

La présente invention présente un raccourcissement notable de l'extrémité supérieure céramique et de l'épaulement supérieur d'une bougie d'allumage, ce qui rigidifie l'ensemble et réduit la masse pendulaire de la partie supérieure de la bougie. Elle utilise en outre une borne interne (le passage central 26) pour haute tension, de façon à réduire encore la masse pendulaire dans cette zone. La réduction de la hauteur de l'isolateur permet aussi un raccourcissement de l'enveloppe, en particulier dans la zone du corps 48, renforçant ainsi l'enveloppe 14 et augmentant sa résistance à la flexion. L'utilisation du tronçon mince 122 dans la douille supérieure 112 introduit un élément de flexion dans la douille supérieure 112, ce qui facilite l'amortissement de vibrations résiduelles dues aux opérations effectuées par le moteur à travers la partie restante de l'ensemble piézocapteur 102. L'agencement des éléments de l'ensemble piézocapteur 102 et leur conception facilitent aussi la réduction de la hauteur de l'empilage de l'élément capteur et une réduction supplémentaire de la hauteur de la bougie d'allumage au-dessus du siège 74 de garniture. L'utilisation de matières ayant un faible coefficient de dilatation thermique pour la douille supérieure 112 (Kovar) et l'isolateur 110 (céramique) et la réduction de la hauteur de l'empilage du capteur par l'élimination et la consolidation de constituants en comparaison avec les conceptions de l'art antérieur (figure 9) minimisent toutes deux la hauteur globale de l'empilage thermiquement actif de l'élément capteur tout en réduisant la propension à une dérive thermique.

L'introduction de l'élément de flexion dans la douille supérieure 112 peut également permettre une adaptation à un certain défaut d'alignement pendant l'assemblage en permettant une flexion de la douille. L'introduction d'un isolateur 110 établissant un contact linéaire avec la douille supérieure 112 permet aussi une adaptation à un certain défaut d'alignement pendant l'assemblage et assure l'application d'une charge purement axiale sur le capteur, tout en assurant que la charge axiale est correctement répartie sur la face du capteur. Les éléments de l'ensemble piézocapteur 102 peuvent être conçus pour avoir le même diamètre extérieur afin qu'ils puissent être chargés dans un montage d'alignement séparé pendant le processus d'assemblage pour assurer l'alignement de leurs diamètres intérieurs et la concentricité et assurer qu'il n'y a pas d'interférence entre ces éléments et le corps 48 avant l'application d'une précontrainte et le soudage de l'ensemble piézocapteur 102 au corps 48.

Il va de soi que de nombreuses modifications peuvent être apportées aux dispositifs décrits et représentés sans sortir du cadre de l'invention.

## Revendications

1. Bougie d'allumage comportant :
un ensemble à électrode centrale (16) comportant une tige de branchement (40) à une extrémité et une électrode centrale (84) ayant une surface d'éclatement à une extrémité opposée ;
un isolateur (12) globalement tubulaire entourant ledit ensemble à électrode centrale (16) ; et
une enveloppe (14) entourant ledit isolateur (12) et ayant un retour (44) sur une première extrémité, un corps (48) ayant une surface extérieure et un épaulement (78) de corps sur un rebord (74) de garniture de celui-ci, une partie filetée (70) et une électrode de masse (18),
**caractérisée en ce qu'**elle comporte en outre :
un ensemble piézocapteur (102) situé sur l'épaulement (78) du corps à proximité de la surface extérieure du corps et comportant, dans l'ordre à partir de l'épaulement (78) du corps et reliés fonctionnellement entre eux par une précontrainte d'assemblage, un contact d'électrode inférieur (104), un piézoélément (106), un contact d'électrode supérieur (108), un isolateur (110) et une douille supérieure (112), laquelle douille supérieure est fixée au corps et maintient de ce fait la précontrainte d'assemblage,
et **en ce que** l'isolateur (110) de l' ensemble piézocapteur a une surface supérieure qui comporte au moins un chanfrein (116) configuré pour établir une ligne de force axiale entre une surface inférieure de la douille supérieure (112) et la surface supérieure de l'isolateur (110).

2. Bougie d'allumage comportant :
un ensemble à électrode centrale (16) comportant une tige de branchement (40) à une extrémité et une électrode centrale (84) présentant une surface d'éclatement à une extrémité opposée ;
un isolateur (12) globalement tubulaire entourant l'ensemble à électrode centrale (16) ; et
une enveloppe (14) entourant l'isolateur (12) et ayant un retour (44) sur une première extrémité, un corps (48) ayant une surface extérieure et un épaulement (78) de corps sur un rebord (74) de garniture de celui-ci, une partie filetée (70) et une électrode de masse (18),
**caractérisée en ce qu'**elle comporte en outre :
un ensemble piézocapteur (102) situé sur l'épaulement (78) du corps à proximité de la surface extérieure du corps et comportant, dans l'ordre à partir de l'épaulement (78) du corps et reliés fonctionnellement entre eux par une précontrainte d'assemblage, un contact d'électrode inférieur (104) un piézoélément (106), un contact d'électrode supérieur (108), un isolateur (110) et une douille supérieure (112), laquelle douille supérieure est fixée au corps et maintient de ce fait la précontrainte d'assemblage,
et **en ce que** l'isolateur (110) de l'ensemble piézocapteur a une surface supérieure convexe configurée pour établir une ligne de force axiale entre une surface inférieure de la douille supérieure (112) et la surface supérieure de l'isolateur (110).

3. Bougie d'allumage selon l'une des revendications 1 ou 2, **caractérisée en ce que** le piézoélément (106) est choisi dans l'ensemble des éléments piézoélectriques et des éléments piézorésistifs.

4. Bougie d'allumage selon la revendication 3, **caractérisée en ce que** l'élément piézoélectrique comprend une piézocéramique, notamment du mica.

5. Bougie d'allumage selon la revendication 1, **caractérisée en ce que** ledit au moins un chanfrein (116) a une longueur de chanfrein et un angle de chanfrein, et **en ce que** la position de la ligne axiale de force le long de la surface supérieure de l'isolateur est fonction de la longueur du chanfrein et/ou de l'angle du chanfrein.

6. Bougie d'allumage selon l'une des revendications 1 à 5, **caractérisée en ce que** le contact d'électrode supérieur (108) a une section transversale en forme de L.

7. Bougie d'allumage selon l'une des revendications 1 à 6, **caractérisée en ce que** la douille supérieure (112) comporte un chambrage (124) situé sur un diamètre intérieur de celle-ci.

8. Bougie d'allumage selon la revendication7, **caractérisée en ce que** le chambrage (124) est situé dans un tronçon médian de la douille supérieure (112).

9. Bougie d'allumage selon la revendication 8, **caractérisée en ce que** le chambrage (124) a un profil en section transversale de forme trapézoïdale.

10. Bougie d'allumage selon l'une des revendications 1 à 9, **caractérisée en ce que** l'ensemble piézocapteur (102) a une fréquence effective de fonctionnement s'élevant jusqu'à environ 20 kHz.

11. Bougie d'allumage selon l'une des revendications 2 ou 10, **caractérisée en ce que** l'enveloppe (14) a un siège de cylindre sur une surface inférieure du corps, et l'isolateur a une longueur au-dessus du siège de cylindre de 1,13 pouce (28,70 mm) ou moins.

12. Procédé de réalisation d'une bougie d'allumage, **caractérisé en ce qu'**il comprend les étapes qui consistent :
à former une bougie d'allumage (10) comportant : un ensemble à électrode centrale (16) comportant une tige de branchement (40) à une extrémité et une électrode centrale (84) ayant une surface d'éclatement à une extrémité opposée ; un isolateur (12) globalement tubulaire entourant l'ensemble à électrode centrale (16) ; et une enveloppe (14) entourant l'isolateur (12) et ayant un retour (44) sur une première extrémité, un corps (48) ayant une surface extérieure et un épaulement (78) de corps sur un rebord (74) de garniture de celui-ci, une partie filetée (70) et une électrode de masse (18) ;
à introduire un ensemble piézocapteur (102) sur l'épaulement (78) du corps à proximité de la surface extérieure du corps, lequel ensemble comporte, dans l'ordre à partir de l'épaulement (78) et reliés fonctionnellement entre eux par une précontrainte d'assemblage, un contact d'électrode inférieur (104), un piézoélément (106), un contact d'électrode supérieur (108), un isolateur (110) et une douille supérieure (112) ; l'isolateur (110) ayant une surface supérieure convexe ou chanfreinée configurée pour établir une ligne de force axiale entre une surface inférieure de la douille supérieure (112) et la surface supérieure de l'isolateur (110).à précontraindre en compression l'ensemble piézocapteur contre l'épaulement du corps ; et
à assujettir la douille supérieure au corps pour fixer la précontrainte de l'ensemble piézocapteur (102).

13. Procédé selon la revendication 12, **caractérisé en ce qu'**il comprend en outre l'étape consistant à former le piézoélément avec une surface supérieure convexe ou chanfreinée afin que la surface supérieure ait pour fonction de porter contre la douille supérieure (112) suivant un contact linéaire.

14. Procédé selon l'une des revendications 12 ou 13, **caractérisé en ce qu'**il comprend en outre la formation de la douille supérieure (112) avec un chambrage (124) sur un diamètre intérieur de celle-ci.

15. Procédé selon la revendication 14, **caractérisé en ce qu'**il comprend en outre la formation du chambrage (124) afin qu'il ait un profil en section trapézoïdale.

## Patentansprüche

1. Zündkerze, umfassend:
eine Zentralelektrodeneinheit (16) mit einem Anschlussstift (40) an einem Ende und einer zentralen Elektrode (84), die eine Funkenfläche aufweist, an einem gegenüberliegenden Ende;
einen allgemein rohrförmigen Isolator (12), der die Zentralelektrodeneinheit (16) umgibt, und
eine Hülle (14), die den Isolator (12) umgibt und einen Rand (44) an einem ersten Ende aufweist, einen Körper (48) mit einer Außenfläche und einer Schulter (78) des Körpers auf einem Einfassungsrand (74) desselben, einen Gewindeabschnitt (70) und eine Masseelektrode (18),
**dadurch gekennzeichnet, dass** sie ferner umfasst:
eine Piezosensoreinheit (102), die auf der Schulter (78) des Körpers, nahe dessen Außenfläche, angeordnet ist und, in der Reihenfolge von der Schulter (78) des Körpers aus und untereinander durch eine Montagevorspannung funktionell miteinander verbunden, umfasst: einen unteren Elektrodenkontakt (104), ein Piezoelement (106), einen oberen Elektrodenkontakt (108), einen Isolator (110) und eine obere Buchse (112), wobei die obere Buchse am Körper befestigt ist und dadurch die Montagevorspannung aufrecht erhält, und dadurch, dass der Isolator (110) der Piezosensoreinheit eine Oberseite aufweist, die mindestens eine Fase (116) umfasst, die zum Erzeugen einer Axialkraftlinie zwischen einer Unterseite der oberen Buchse (112) und der Oberseite des Isolators (110) eingerichtet ist.

2. Zündkerze, umfassend:
eine Zentralelektrodeneinheit (16) mit einem Anschlussstift (40) an einem Ende und einer zentralen Elektrode (84), die eine Funkenfläche aufweist, an einem gegenüberliegenden Ende;
einen allgemein rohrförmigen Isolator (12), der die Zentralelektrodeneinheit (16) umgibt, und
eine Hülle (14), die den Isolator (12) umgibt und einen Rand (44) an einem ersten Ende aufweist, einen Körper (48) mit einer Außenfläche und einer Schulter (78) des Körpers auf einem Einfassungsrand (74) desselben, einen Gewindeabschnitt (70) und eine Masseelektrode (18),
**dadurch gekennzeichnet, dass** sie ferner umfasst:
eine Piezosensoreinheit (102), die auf der Schulter (78) des Körpers, nahe dessen Außenfläche, angeordnet ist und, in der Reihenfolge von der Schulter (78) des Körpers aus und untereinander durch eine Montagevorspannung funktionell miteinander verbunden, umfasst: einen unteren Elektrodenkontakt (104), ein Piezoelement (106), einen oberen Elektrodenkontakt (108), einen Isolator (110) und eine obere Buchse (112), wobei die obere Buchse am Körper befestigt ist und dadurch die Montagevorspannung aufrecht erhält,
und dadurch, dass der Isolator (110) der Piezosensoreinheit eine konvexe Oberseite aufweist, die zum Erzeugen einer Axialkraftlinie zwischen einer Unterseite der oberen Buchse (112) und der Oberseite des Isolators (110) eingerichtet ist.

3. Zündkerze nach einem der Ansprüche 1 oder 2, **dadurch gekennzeichnet, dass** das Piezoelement (106) aus der Grupe der piezoelektrischen und piezoresistiven Elemente ausgewählt ist.

4. Zündkerze nach Anspruch 3, **dadurch gekennzeichnet, dass** das piezoelektrische Element eine Piezokeramik, insbesondere Glimmer, umfasst.

5. Zündkerze nach Anspruch 1, **dadurch gekennzeichnet, dass** die mindestens eine Fase (116) eine Fasenlänge und einen Fasenwinkel aufweist, und dass die Position der Axialkraftlinie entlang der Oberseite des Isolators von der Fasenlänge und/oder dem Fasenwinkel abhängt.

6. Zündkerze nach einem der Ansprüche 1 bis 5, **dadurch gekennzeichnet, dass** der obere Elektrodenkontakt (108) einen L-förmigen Querschnitt aufweist.

7. Zündkerze nach einem der Ansprüche 1 bis 6, **dadurch gekennzeichnet, dass** die obere Buchse (112) eine Hinterschneidung (124) umfasst, die auf einem Innendurchmesser derselben angeordnet ist.

8. Zündkerze nach Anspruch 7, **dadurch gekennzeichnet, dass** die Hinterschneidung (124) in einem Mittelabschnitt der oberen Buchse (112) angeordnet ist.

9. Zündkerze nach Anspruch 8, **dadurch gekennzeichnet, dass** die Hinterschneidung (124) ein trapezförmiges Querschnittsprofil aufweist.

10. Zündkerze nach einem der Ansprüche 1 bis 9, **dadurch gekennzeichnet, dass** die Piezosensoreinheit (102) eine effektive Arbeitsfrequenz von bis zu etwa 20 kHz aufweist.

11. Zündkerze nach einem der Ansprüche 2 oder 10, **dadurch gekennzeichnet, dass** die Hülle (14) einen Zylindersitz an einer Unterseite des Körpers aufweist und der Isolator eine Länge oberhalb des Zylindersitzes von 1,13 Zoll (28,70 mm) oder weniger aufweist.

12. Verfahren zur Herstellung einer Zündkerze, **dadurch gekennzeichnet, dass** es die folgenden Schritte umfasst:
Bilden einer Zündkerze (10), umfassend: eine Zentralelektrodeneinheit (16) mit einem Anschlussstift (40) an einem Ende und einer zentralen Elektrode (84), die eine Funkenfläche aufweist, an einem gegenüberliegenden Ende; einen allgemein rohrförmigen Isolator (12), der die Zentralelektrodeneinheit (16) umgibt, und eine Hülle (14), die den Isolator (12) umgibt und einen Rand (44) an einem ersten Ende aufweist, einen Körper (48) mit einer Außenfläche und einer Schulter (78) des Körpers auf einem Einfassungsrand (74) desselben, einen Gewindeabschnitt (70) und eine Masseelektrode (18), Einbringen einer Piezosensoreinheit (102) an der Schulter (78) des Körpers, nahe dessen Außenfläche, wobei die Einheit in der Reihenfolge von der Schulter (78) aus und untereinander durch eine Montagevorspannung funktionell miteinander verbunden, umfasst:
einen unteren Elektrodenkontakt (104), ein Piezoelement (106), einen oberen Elektrodenkontakt (108), einen Isolator (110) und eine obere Buchse (112), wobei der Isolator (110) eine konvexe oder abgeschrägte Oberseite aufweist, die dazu eingerichtet ist,
eine Axialkraftlinie zwischen einer Unterseite der oberen Buchse (112) und der Oberseite des Isolators (110) zu erzeugen;
die Piezosensoreinheit unter Druck gegen die Schulter des Körpers vorzuspannen, und die obere Buchse am Körper zu befestigen, um die Vorspannung der Piezosensoreinheit (102) zu fixieren.

13. Verfahren nach Anspruch 12, **dadurch gekennzeichnet, dass** es ferner den Schritt umfasst, der darin besteht, das Piezoelement mit einer konvexen oder abgeschrägten Oberseite auszubilden, damit die Oberseite zum Andrücken gegen die obere Buchse (112) nach einem linearen Kontakt dient.

14. Verfahren nach einem der Ansprüche 12 oder 13, **dadurch gekennzeichnet, dass** es ferner die Ausbildung der oberen Buchse (112) mit einer Hinterschneidung (124) auf einem Innendurchmesser derselben umfasst.

15. Verfahren nach Anspruch 14, **dadurch gekennzeichnet, dass** es ferner die Ausbildung der Hinterschneidung (124) dergestalt umfasst, dass diese ein trapezförmiges Querschnittsprofil aufweist.

## Claims

1. A spark plug comprising:
a center electrode assembly (16) comprising a terminal stud (40) at one end and a center electrode (84) having a sparking surface at an opposite end;
a generally tubular insulator (12) surrounding the center electrode assembly (16); and
a shell (14) surrounding the insulator (12) and having a turned portion (44) on a first end, a barrel (48) having an outer surface and a barrel shoulder (78) on a gasket flange (74) thereof, a threaded portion (70) and a ground electrode (18),
**characterized in that** it further comprises:
a piezo sensor assembly (102) located on the barrel shoulder (78) proximate the outer surface of the barrel and comprising in order from the barrel shoulder (78) and operatively linked together by an assembly preload, a lower electrode contact (104), a piezo transducer (106), an upper electrode contact (108), an isolator (110) and an upper bushing (112), which upper bushing is fastened to the barrel and thereby maintains the assembly preload,
and **in that** the isolator (110) of the piezo sensor assembly has an upper surface which comprises at least one chamfer (116) configured to produce an axial line of force between an upper surface of the upper bushing (112) and the upper surface of the isolator (110).

2. A spark plug comprising:
a center electrode assembly (16) comprising a terminal stud (40) at one end and a center electrode (84) having a sparking surface at an opposite end;
a generally tubular insulator (12) surrounding the center electrode assembly (16); and
a shell (14) surrounding the insulator (12) and having a turned portion (44) on a first end, a barrel (48) having an outer surface and a barrel shoulder (78) on a gasket flange (74) thereof, a threaded portion (70) and a ground electrode (18),
**characterized in that** it further comprises:
a piezo sensor assembly (102) located on the barrel shoulder (78) proximate the outer surface of the barrel and comprising in order from the barrel shoulder (78) and operatively linked together by an assembly preload, a lower electrode contact (104) a piezo transducer (106), an upper electrode contact (108), an isolator (110) and an upper bushing (112), which upper bushing is fastened to the barrel and thereby maintains the assembly preload,
and **in that** the isolator (110) of the piezo sensor assembly has a convex upper surface configured to produce an axial line of force between a lower surface of the upper bushing (112) and the upper surface of the isolator (110).

3. The spark plug according to one of claims 1 or 2, **characterised in that** the piezo transducer (106) is chosen from the group comprising piezoelectric transducers and piezoresistive transducers.

4. The spark plug according to claim 3, **characterised in that** the piezoelectric transducer comprises piezo ceramic, in particular mica.

5. The spark plug according to claim 1, **characterised in that** said at least one chamfer (116) has a chamfer length and a chamfer angle, and the position of the axial line of force along the upper surface of the isolator is a function of the chamfer length and/or the chamfer angle.

6. The spark plug according to one of claims 1 to 5, **characterised in that** the upper electrode contact (108) has an L-shaped cross-section.

7. The spark plug according to one of claims 1 to 6, **characterised in that** the upper bushing (112) comprises a counterbore (124) located on an inner diameter thereof.

8. The spark plug according to claim 7, **characterised in that** the counterbore (124) is located in a mid-section of the upper bushing (112).

9. The spark plug according to claim 8, **characterised in that** the counterbore (124) has a cross-section profile in the shape of a trapezoid.

10. The spark plug according to one of claims 1 to 9, **characterised in that** the piezo sensor assembly (102) has an effective operating frequency up to about 20 kHz.

11. The spark plug according to one of claims 2 or 10, **characterised in that** the shell (14) has a cylinder seat on a lower surface of the barrel, and the insulator has a length above a the cylinder seat of 1.13 inches (28.70 mm) or less.

12. A method of making a spark plug, **characterised in that** it comprises the steps of:
forming a spark plug (10) comprising: a center electrode assembly (16) comprising a terminal stud (40) at one end and a center electrode (84) having a sparking surface at an opposite end; a generally tubular insulator (12) surrounding the center electrode assembly (16); and a shell (14) surrounding the insulator (12) and having a turned portion (44) on a first end, a barrel (48) having an outer surface and a barrel shoulder (78) on a gasket flange thereof, a threaded portion (70) and a ground electrode (18);
introducing the piezo sensor assembly (102) onto the barrel shoulder (78) proximate the outer surface of the barrel, which assembly comprises, in order from the barrel shoulder (78) and operatively linked together by an assembly preload, a lower electrode contact (104), a piezo transducer (106), an upper electrode contact (108), an isolator (110) and an upper bushing (112); the isolator (110) having a convex or chamfered upper surface configured to establish an axial line of force between a lower surface of the upper bushing (112) and the upper surface of the isolator (110),
compressively pre-loading the piezo sensor assembly against the barrel shoulder; and
attaching the upper bushing to the barrel to fix the preload of the piezo sensor assembly (102).

13. The method of claim 12, **characterised in that** it further comprises the step of forming the piezo transducer with a convex or chamfered upper surface such that the upper surface is operative to bear against the upper bushing (112) with a linear contact.

14. The method of one of claims 12 or 13, **characterised in that** it further comprises forming the upper bushing (112) with a counterbore (124) on an inner diameter thereof.

15. The method according to claim 14, **characterised in that** it further comprises forming the counterbore (124) such that it has a cross-section profile in the shape of a trapezoid.
